(19) **Europäisches Patentamt**
**European Patent Office**
**Office européen des brevets**

(11) **EP 3 710 822 B1**

(12) **FASCICULE DE BREVET EUROPEEN**

(45) Date de publication et mention de la délivrance du brevet:
**15.10.2025 Bulletin 2025/42**

(21) Numéro de dépôt: **18796995.1**

(22) Date de dépôt: **13.11.2018**

(51) Classification Internationale des Brevets (IPC):
**G01N 29/04** $^{(2006.01)}$     **G21C 17/00** $^{(2006.01)}$
**G01N 29/30** $^{(2006.01)}$     **G01N 29/44** $^{(2006.01)}$

(52) Classification Coopérative des Brevets (CPC):
**G01N 29/04; G01N 29/30; G01N 29/4418; G01N 29/4472; G21C 17/00;** G01N 2291/0289; Y02E 30/30

(86) Numéro de dépôt international:
**PCT/EP2018/081118**

(87) Numéro de publication internationale:
**WO 2019/092285 (16.05.2019 Gazette 2019/20)**

(54) **PROCÉDÉ ET DISPOSITIF ÉLECTRONIQUE DE SIMULATION D'UNE RÉPONSE ULTRASONORE D'UNE PIÈCE MÉTALLIQUE, PROCÉDÉ ET SYSTÈME ÉLECTRONIQUE DE CONTRÔLE ASSOCIÉS**

ELEKTRONISCHE VORRICHTUNG UND VERFAHREN ZUR SIMULATION EINER ULTRASCHALLANTWORT EINES METALLTEILS, ZUGEHÖRIGES ELEKTRONISCHES TESTSYSTEM UND -VERFAHREN

ELECTRONIC DEVICE AND METHOD FOR SIMULATING AN ULTRASONIC RESPONSE OF A METAL PART, ASSOCIATED TESTING ELECTRONIC SYSTEM AND METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2017 FR 1760661**

(43) Date de publication de la demande:
**23.09.2020 Bulletin 2020/39**

(73) Titulaire: **Framatome**
**92400 Courbevoie (FR)**

(72) Inventeurs:
• **LYONNET, Florian**
**44100 Nantes (FR)**
• **CUGNET, Marie-Françoise**
**73190 SAINT JEOIRE PRIEURE (FR)**
• **CASSEREAU, Didier**
**92140 Clamart (FR)**

(74) Mandataire: **Lavoix**
**2, place d'Estienne d'Orves**
**75441 Paris Cedex 09 (FR)**

(56) Documents cités:
**US-A1- 2010 299 095**

• **TANG QIXIANG ET AL: "Finite element simulation of ultrasonic waves in corroded reinforced concrete for early-stage corrosion detection", SPIE DEFENSE AND SECURITY SYMPOSIUM; 16-20 MARCH 2008; ORLANDO, FLORIDA, UNITED STATES, SPIE, US, vol. 10169, 19 April 2017 (2017-04-19), pages N-1 - N-9, XP060088700, ISSN: 0277-786X, ISBN: 978-1-5106-1723-0, DOI: 10.1117/12.2258665**
• **SUBAIR S MOHAMED ET AL: "Finite Element Simulations to Predict Probability of Detection (PoD) Curves for Ultrasonic Inspection of Nuclear Components", PROCEDIA ENGINEERING, ELSEVIER, AMSTERDAM, NL, vol. 86, 17 December 2014 (2014-12-17), pages 461 - 468, XP029116552, ISSN: 1877-7058, DOI: 10.1016/J.PROENG.2014.11.059**

**EP 3 710 822 B1**

**Description**

La présente invention concerne un procédé de simulation d'une réponse ultrasonore d'une pièce métallique, le procédé étant mis en œuvre par un dispositif électronique de simulation.

L'invention concerne également un procédé de contrôle d'une pièce métallique, comprenant la détermination d'une réponse ultrasonore de la pièce métallique, via un système de contrôle comportant au moins un émetteur ultrasonore et au moins un récepteur ultrasonore ; la simulation d'une réponse ultrasonore de la pièce métallique, via la mise en œuvre d'un tel procédé de simulation ; et l'identification d'un éventuel défaut dans la pièce métallique par comparaison des réponses ultrasonores déterminée et simulée de la pièce métallique. Ces défauts peuvent être des défauts contenus à l'intérieur de la pièce métallique, défauts également appelés défauts à cœur, ou des défauts débouchant en surfaces interne ou externe de la pièce métallique.

L'invention concerne également un dispositif électronique de simulation d'une réponse ultrasonore d'une pièce métallique. L'invention concerne aussi un système électronique de contrôle de la pièce métallique.

L'invention concerne notamment le cas où la pièce métallique est une gaine destinée à entourer des pastilles de combustible nucléaire dans un cœur de réacteur nucléaire, et concerne alors la fabrication d'assemblages de combustible nucléaire.

L'invention s'applique, par exemple, aux réacteurs nucléaires à eau légère qu'ils soient à eau pressurisée ou à eau bouillante.

Un grand nombre de ces réacteurs nucléaires sont actuellement exploités dans le monde.

Dans un assemblage de combustible nucléaire, la matière fissile est contenue dans un tube métallique scellé. Ce tube est un élément critique en termes de sûreté, et chaque tube subit donc plusieurs contrôles de qualité. Un des contrôles effectués en fin de fabrication est un contrôle ultrasonore automatisé recherchant des défauts de géométrie du tube. Ce contrôle, non-destructif, est effectué selon les normes internationales en vigueur, et il est alors souhaitable d'améliorer la sélectivité du contrôle, c'est-à-dire de rejeter seulement les tubes présentant des défauts plus importants que des critères prédéfinis et accepter tous les autres tubes. L'utilisation d'un procédé de simulation d'une réponse ultrasonore vise alors à améliorer cette sélectivité du contrôle.

Aujourd'hui, dans la majorité des cas, l'analyse de résultats d'essais ultrasonores industriels fournit généralement des informations qualitatives qui ne permettent pas de relier les signaux reçus par le ou les capteurs ultrasonores à la géométrie des défauts. Par conséquent, les tubes peuvent être rejetés bien que la géométrie réelle des défauts serait considérée comme non-dangereuse si elle était connue.

« Finite element simulation of ultrasonic waves in corroded reinforced concrete for early-stage corrosion detection» de Qixiang Tang et al décrit la simulation d'une réponse ultrasonore d'une pièce métallique, avec le calcul d'une première distribution d'ondes ultrasonores pour la pièce métallique sans défaut.

« Finite Element Simulations to Predict Probability of Detection (PoD) Curves for Ultrasonic Inspection of Nuclear Component » de Subair et al décrit un procédé d'évaluation non-destructive d'une pièce métallique dans le domaine de l'industrie nucléaire.

US 2010/0299095 A1 décrit un procédé de contrôle d'un matériau, comprenant la détermination d'une réponse ultrasonore du matériau via un capteur ultrasonore.

Des procédés de simulation d'une réponse ultrasonore d'une pièce métallique existent. Ces procédés de simulation mettent par exemple en œuvre des méthodes semi-analytiques, telles que l'intégrale de Rayleigh ou la méthode des pinceaux, ou encore des méthodes discrètes, telles que la méthode des différences finies ou la méthode des éléments finis.

Toutefois, le facteur limitant de tels procédés de simulation est le temps de calcul pour obtenir la réponse simulée d'une pièce métallique avec un défaut de géométrie arbitraire tridimensionnelle.

Un but de l'invention est de résoudre ce problème en fournissant un procédé et un dispositif électronique de simulation d'une réponse ultrasonore d'une pièce métallique, permettant de diminuer le temps nécessaire au calcul.

A cet effet, l'invention a pour objet un procédé de simulation d'une réponse ultrasonore d'une pièce métallique, selon la revendication 1.

Suivant d'autres aspects avantageux de l'invention, le procédé de simulation est selon l'une quelconque des revendications 2 à 7.

L'invention a également pour objet un procédé de contrôle d'une pièce métallique, selon la revendication 8.

L'invention a en outre pour objet un dispositif électronique de simulation d'une réponse ultrasonore d'une pièce métallique, selon la revendication 9.

L'invention a en outre pour objet un système électronique de contrôle d'une pièce métallique, selon la revendication 10.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique de contrôle d'une pièce métallique, le système comprenant un dispositif électronique de détermination d'une réponse ultrasonore de la pièce métallique, à partir d'un capteur ultrasonore, un dispositif électronique de simulation d'une réponse ultrasonore de la pièce métallique et un dispositif électronique d'identification d'un éventuel défaut dans la pièce métallique par comparaison des réponses ultrasonores déterminée et simulée de la pièce métallique ;
- la figure 2 est une vue schématique illustrant un réacteur nucléaire à eau pressurisée, la pièce métallique contrôlée par le système de contrôle de la figure 1 étant par exemple une gaine destinée à entourer des pastilles de combustible nucléaire dans un cœur de réacteur nucléaire ;
- la figure 3 est une vue schématique latérale d'un assemblage de combustible du cœur du réacteur nucléaire de la figure 2 ;
- la figure 4 est un organigramme d'un procédé, selon l'invention, de contrôle d'une pièce métallique, comprenant la détermination d'une réponse ultrasonore de la pièce métallique, via un capteur ultrasonore, la simulation d'une réponse ultrasonore de la pièce métallique, et l'identification d'un éventuel défaut dans la pièce métallique par comparaison des réponses ultrasonores déterminée et simulée de la pièce métallique ;
- la figure 5 est un organigramme d'un procédé, selon l'invention, de simulation d'une réponse ultrasonore de la pièce métallique, le procédé de simulation étant utilisé pour la simulation sur la figure 4 d'une réponse ultrasonore ;
- les figures 6 et 7 sont des vues bidimensionnelles illustrant le calcul d'une première distribution d'ondes ultrasonores pour une pièce métallique saine, afin de simuler une réponse ultrasonore reçue de la pièce métallique lorsqu'elle ne comporte pas de défaut ; et
- les figures 8 et 9 sont des vues bidimensionnelles illustrant le calcul d'une deuxième distribution d'ondes ultrasonores pour une zone prédéfinie associée à la pièce métallique, la zone prédéfinie comportant un défaut, afin de simuler une réponse ultrasonore reçue de la zone comportant le défaut, et
- les figures 10 et respectivement 11 sont des vues bidimensionnelles illustrant l'utilisation d'un double maillage en tension d'une part, et en vitesse d'autre part, pour le calcul des première et deuxième distributions.

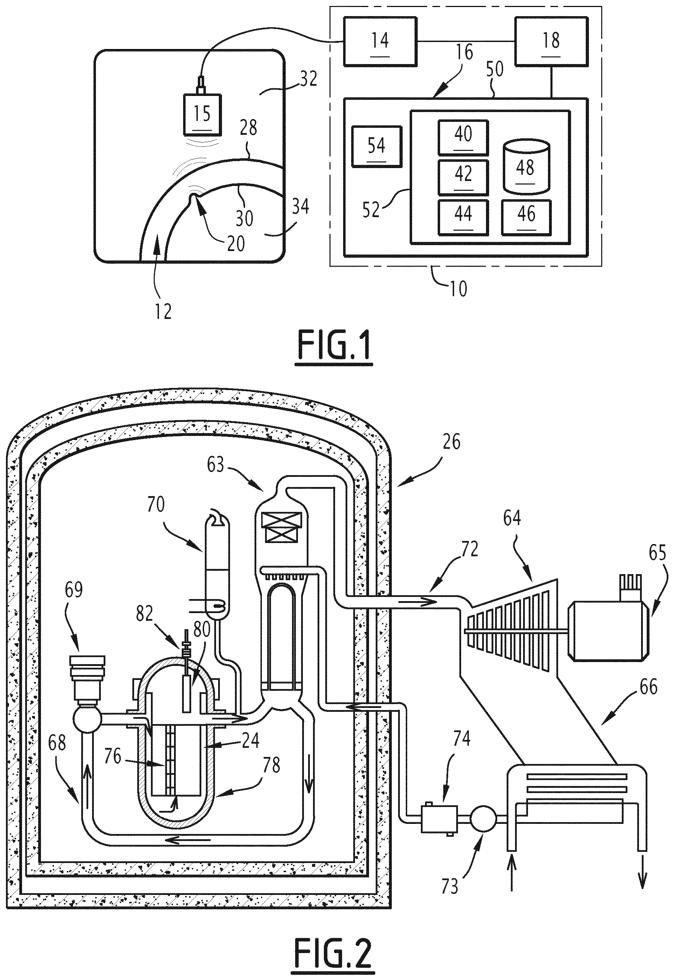

Sur la figure 1, un système électronique de contrôle 10 est configuré pour contrôler une pièce métallique 12, et comprend un dispositif électronique de détermination 14 configuré pour déterminer une réponse ultrasonore de la pièce métallique 12, à partir d'un capteur ultrasonore 15.

Le système électronique de contrôle 10 comprend en outre un dispositif électronique de simulation 16 configuré pour simuler une réponse ultrasonore de la pièce métallique 12, et un dispositif électronique d'identification 18 configuré pour identifier un éventuel défaut 20 dans la pièce métallique 12 par comparaison des réponses ultrasonores déterminée et simulée de la pièce métallique 12.

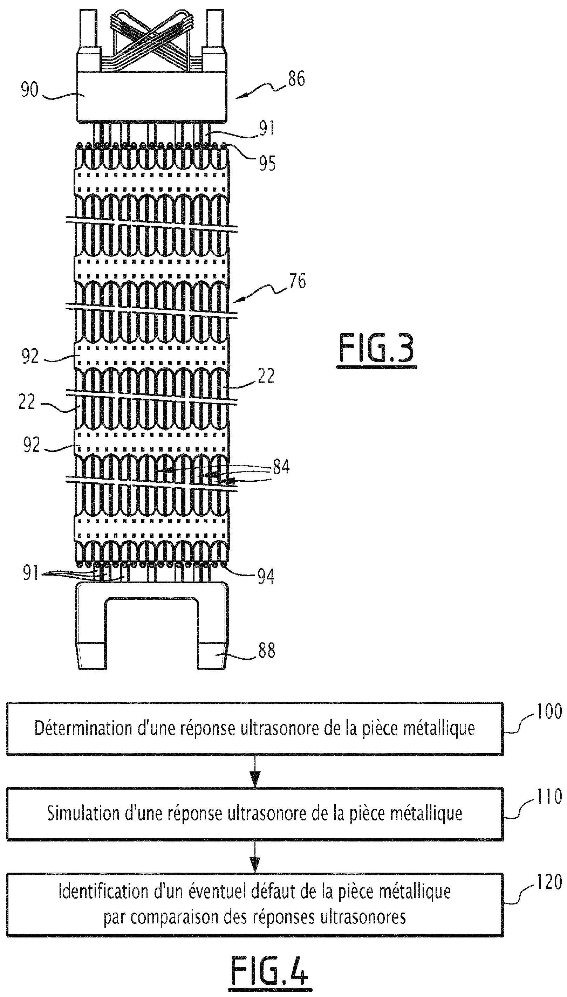

Le système électronique de contrôle 10 est notamment configuré pour contrôler une gaine 22 destinée à entourer des pastilles de combustible nucléaire dans un cœur 24 de réacteur nucléaire 26, comme cela sera décrit plus en détail en regard des figures 2 et 3. L'homme du métier comprendra alors que, dans ce cas, la pièce métallique 12 contrôlée par le système de contrôle 10 est la gaine 22.

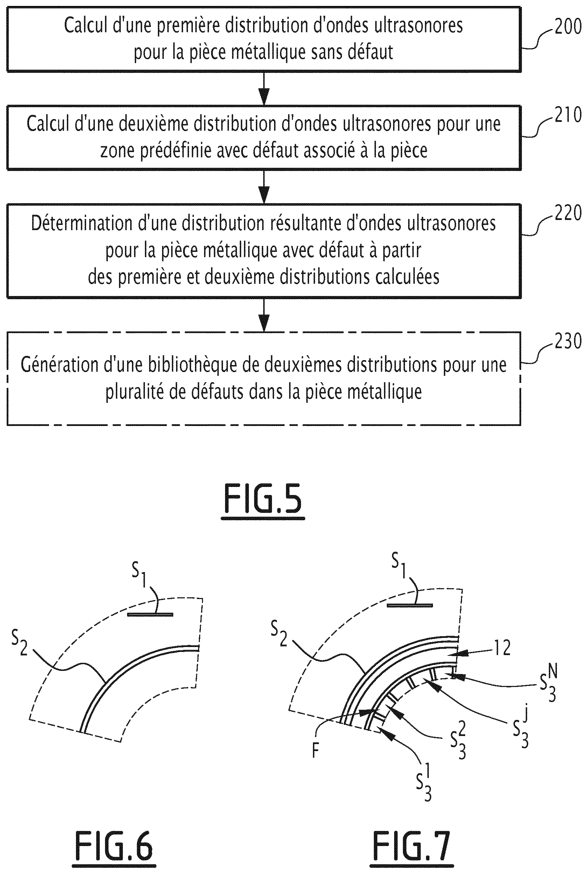

La pièce métallique 12 est par exemple de forme cylindrique ou plane, telle qu'un tube, une barre ou une plaque métallique. La pièce métallique 12 a de préférence une géométrie régulière au sens où la pièce métallique 12 est décomposable en sous-volumes $S_3^j$, $S_3^k$ de formes et de propriétés mécaniques sensiblement identiques. Chaque sous-volume $S_3^j$, $S_3^k$, visible sur les figures 7 à 9, est délimité par une frontière F respective.

La pièce métallique 12 comporte une surface extérieure 28 orientée vers le capteur ultrasonore 15 et une surface intérieure 30. Dans l'exemple de la figure 1, la surface extérieure 28 est en contact avec un liquide 32, tel que de l'eau, et la surface intérieure 30 est en contact avec un autre fluide liquide ou gazeux 34, tel que de l'air.

Dans l'exemple de la figure 1, le dispositif électronique de détermination 14 est relié au capteur ultrasonore 15 adapté à la fois pour l'émission d'une excitation ultrasonore impulsionnelle en direction de la pièce métallique 12 et pour la réception d'une réponse ultrasonore depuis la pièce métallique 12, en réponse à l'émission d'une excitation ultrasonore en direction de ladite pièce métallique 12. En variante non représentée, le dispositif électronique de détermination 14 est relié d'une part au capteur ultrasonore 15 formant seulement un récepteur ultrasonore, et d'autre part à un émetteur ultrasonore distinct du capteur ultrasonore 15.

Le dispositif électronique de détermination 14 est alors configuré pour commander l'émission d'une excitation ultrasonore impulsionnelle en direction de la pièce métallique 12, puis pour acquérir la réponse ultrasonore reçue via le capteur ultrasonore 15 depuis la pièce métallique 12. L'homme du métier comprendra en outre que lorsque le dispositif électronique de détermination 14 commande l'émission d'une excitation ultrasonore impulsionnelle en direction d'une zone partielle de la pièce métallique 12, puis acquiert la réponse ultrasonore reçue via le capteur ultrasonore 15 depuis ladite zone partielle de la pièce métallique 12, le dispositif électronique de détermination 14 est configuré en outre pour assembler les réponses ultrasonores des zones partielles distinctes de la pièce métallique 12, afin de déterminer la réponse ultrasonore globale de la pièce métallique 12. A titre d'exemple, la réponse ultrasonore globale est en forme d'une cartographie, telle qu'une représentation des maximums des réponses ultrasonores de chaque zone partielle de la pièce métallique 12.

Dans l'exemple de la figure 1, le capteur ultrasonore 15, voire en complément l'émetteur ultrasonore, est disposé dans le liquide 32.

Le dispositif électronique de simulation 16 comprend un premier module de calcul 40 configuré pour calculer une première distribution d'ondes ultrasonores pour la pièce métallique 12 sans défaut, afin de simuler une réponse ultrasonore reçue de la pièce métallique 12 lorsqu'elle ne comporte pas de défaut.

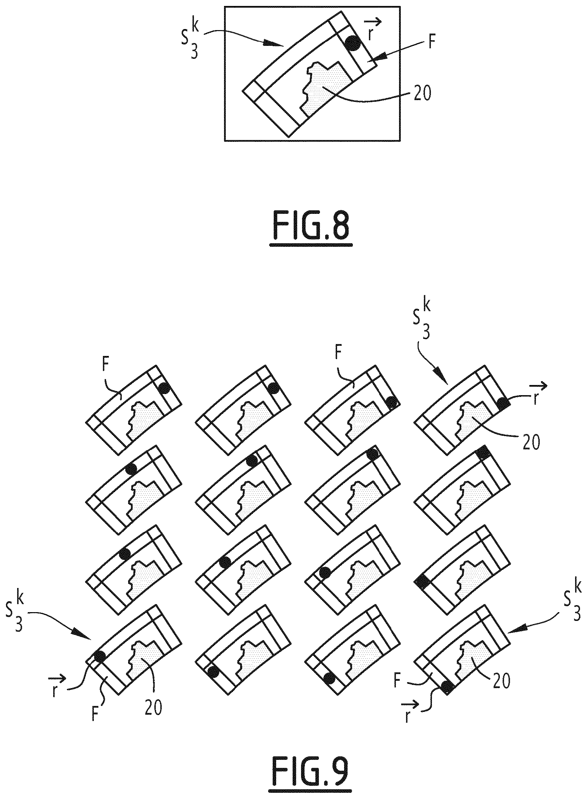

Le dispositif électronique de simulation 16 comprend un deuxième module de calcul 42 configuré pour calculer une deuxième distribution d'ondes ultrasonores pour une zone prédéfinie $S_3^k$ associée à la pièce métallique 12, la zone prédéfinie $S_3^k$ (visible sur les figures 8 et 9) comportant un défaut 20 de la pièce métallique 12, afin de simuler une réponse ultrasonore reçue de la zone prédéfinie $S_3^k$ qui comporte le défaut 20.

Le dispositif électronique de simulation 16 comprend un module de détermination 44 configuré pour déterminer une distribution résultante d'ondes ultrasonores pour la pièce métallique 12 avec défaut, à partir des première et deuxième distributions calculées, afin de simuler une réponse ultrasonore reçue de la pièce métallique 12 lorsqu'elle comporte le défaut 20

En complément facultatif, le dispositif électronique de simulation 16 comprend un module de génération 46 configuré pour générer une bibliothèque 48 de deuxièmes distributions pour une pluralité de défauts 20 dans la pièce métallique 12 et d'orientations de l'émission d'excitation ultrasonore impulsionnelle, chaque deuxième distribution étant calculée pour un défaut respectif 20 de la pièce métallique 12.

Dans l'exemple de la figure 1, le dispositif électronique de simulation 16 comprend une unité de traitement d'informations 50 formée par exemple d'une mémoire 52 associée à un processeur 54.

Dans l'exemple de la figure 1, le premier module de calcul 40, le deuxième module de calcul 42, le module de détermination 44, et en complément facultatif le module de génération 46, sont réalisés chacun sous forme d'un logiciel exécutable par le processeur 54. La mémoire 52 est alors apte à stocker un premier logiciel de calcul de la première distribution d'ondes ultrasonores pour la pièce métallique 12 sans défaut, un deuxième logiciel de calcul de la deuxième distribution d'ondes ultrasonores pour la zone prédéfinie $S_3^k$ comportant le défaut 20 de la pièce métallique 12, un logiciel de détermination de la distribution résultante d'ondes ultrasonores pour la pièce métallique 12 avec défaut, à partir des première et deuxième distributions calculées, ainsi qu'en complément facultatif un logiciel de génération de la bibliothèque 48 de deuxièmes distributions pour une pluralité de défauts 20 dans la pièce métallique 12 et d'orientations de l'émission d'excitation ultrasonore. Le processeur 54 de l'unité de traitement d'informations 50 est alors apte à exécuter le premier logiciel de calcul, le deuxième logiciel de calcul, le logiciel de détermination, et en complément facultatif le logiciel de génération.

En variante non représentée, le premier module de calcul 40, le deuxième module de calcul 42, le module de détermination 44, et en complément facultatif le module de génération 46, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Le dispositif électronique d'identification 18 est configuré pour identifier un éventuel défaut 20 dans la pièce métallique 12 par comparaison des réponses ultrasonores déterminée et simulée de la pièce métallique 12, en particulier pour corréler une réponse ultrasonore simulée pour un défaut 20 prédéterminé avec la réponse ultrasonore déterminée par le dispositif électronique de détermination 14.

Autrement dit, le dispositif électronique d'identification 18 permet d'associer la réponse ultrasonore reçue par le capteur ultrasonore 15 à la géométrie d'un défaut 20 dont la réponse ultrasonore a été simulée par le dispositif électronique de simulation 16 selon l'invention.

Le défaut 20 est situé au cœur de la pièce métallique 12, c'est-à-dire à l'intérieur de la pièce métallique 12, ou bien est débouchant par rapport à la pièce métallique 12.

Le premier module de calcul 40 est configuré pour calculer la première distribution d'ondes ultrasonores pour la pièce métallique 12 sans défaut, la première distribution formant une simulation d'une réponse ultrasonore reçue par le capteur ultrasonore 15 depuis la pièce métallique 12 lorsqu'elle ne comporte pas de défaut, en réponse à l'émission d'une excitation ultrasonore en direction de ladite pièce 12.

Le calcul de la première distribution par le premier module de calcul 40 est connu en soi, et sera décrit plus en détail par la suite en regard des figures 6 et 7.

Le deuxième module de calcul 42 est configuré pour calculer la deuxième distribution d'ondes ultrasonores pour la zone prédéfinie $S_3^k$ associée à la pièce métallique 12, la deuxième distribution formant une simulation d'une réponse ultrasonore reçue par le capteur ultrasonore 15 depuis la zone prédéfinie $S_3^k$, en réponse à l'émission d'une excitation ultrasonore en direction de ladite zone $S_3^k$.

Le deuxième module de calcul 42 est alors configuré pour calculer une pluralité de distributions élémentaires, chaque distribution élémentaire correspondant à une réponse ultrasonore reçue par un récepteur situé à la frontière F de

la zone prédéfinie $S_3^k$, en réponse à l'émission d'une excitation ultrasonore depuis une source élémentaire $\vec{r}$ située à la frontière F de la zone prédéfinie $S_3^k$, comme cela sera décrit plus en détail par la suite en regard des figures 8 et 9. Dans la suite de la description, la source élémentaire sera indistinctement notée r ou $\vec{r}$.

Le deuxième module de calcul 42 est configuré pour calculer chaque distribution élémentaire à partir d'une fonction de transfert de Green sur un domaine de calcul restreint à la zone prédéfinie $S_3^k$, et pour lequel la source élémentaire r et le récepteur r' sont situés à la frontière F de ladite zone $S_3^k$

Le deuxième module de calcul 42 est par exemple configuré pour calculer chaque distribution élémentaire via l'équation suivante :

$$v_i^B(r,t) = \int_F (H_{ni}(r',r,t) * v_n^A(r',t) - t_n^A(r',t) * G_{ni}(r',r,t)) \cdot \mathrm{d}F \qquad (1)$$

où $v_i^B(r,t)$ représente une composante selon la direction i de la vitesse particulaire au point r dans un état B en présence du défaut,

F représente la frontière de la zone prédéfinie $S_3^k$,

$H_{ni}(r',r,t)$ représente une composante selon la direction i d'un vecteur traction sur la frontière F au point r' généré par une excitation depuis une source impulsionnelle en vitesse de direction n au point r,

$v_n^A(r',t))$ représente une composante selon la direction n de la vitesse particulaire au point r' dans l'état A,

$t_n^A(r',t))$ représente une composante selon la direction n de la traction sur la frontière F au point r' dans un état A sans défaut,

$G_{ni}(r',r,t)$ est une fonction de transfert de Green représentant une composante selon la direction i de la vitesse au point r' générée par une excitation depuis une source impulsionnelle en vitesse de direction n au point r, et

les symboles '*' représentent l'opérateur de convolution temporel.

Le module de détermination 44 est configuré pour déterminer la distribution résultante d'ondes ultrasonores pour la pièce métallique 12 avec le défaut 20, à partir des première et deuxième distributions calculées, la distribution résultante formant une simulation d'une réponse ultrasonore reçue par le capteur ultrasonore 15 depuis la pièce métallique 12 comportant le défaut 20, en réponse à l'émission d'une excitation ultrasonore en direction de ladite pièce 12 comportant le défaut 20.

Le module de détermination 44 est de préférence configuré pour déterminer la distribution résultante en appliquant l'équation de réciprocité d'Auld aux première et deuxième distributions calculées.

Le module de détermination 44 est par exemple configuré pour déterminer la distribution résultante $R^B(t)$ selon l'équation suivante :

$$R^B(t) = \mathrm{h}R^A(t) * E(t) + R^{\mathrm{Diff}}(t) \qquad (2)$$

$$\text{avec } R^{\mathrm{Diff}}(t) = -\frac{1}{2 \cdot I_0} \int_F (\mathrm{h}t_i^A(r',t) * v_i^B(r',t) - t_i^B(r',t) * \mathrm{h}v_i^A(r',t)) \cdot \mathrm{d}F \qquad (3)$$

où $R^{\mathrm{Diff}}(t)$ représente la contribution du défaut 20 au signal reçu par le capteur ultrasonore 15,

avec $R^B(t)$ représentant le signal électrique mesuré en réception par le capteur ultrasonore 15, pour la pièce métallique 12 dans un état B en présence du défaut 20,

$\mathrm{h}R^A(t)$ représentant la réponse impulsionnelle du signal électrique en réception, dans un état A sans défaut,

$E(t)$ représentant le signal électrique d'excitation du capteur ultrasonore 15,

$\mathrm{h}t_i^A(r',t)$ représentant la réponse impulsionnelle pour la composante selon une direction i de la traction sur la frontière F au point r', dans l'état A,

$v_i^B(r',t)$ représentant une composante selon la direction i de la vitesse particulaire au point r', dans l'état B,

$t_i^B(r',t))$ représentant une composante selon la direction i de la traction sur la frontière F au point r', dans l'état B,

$\mathrm{h}v_i^A(r',t)$ représentant la réponse impulsionnelle pour la composante selon la direction i de la vitesse particulaire au point r', dans l'état A,

$I_0$ représentant une constante de normalisation propre au capteur ultrasonore 15 et à un système d'amplification du signal, et

les symboles '*' représentent l'opérateur de convolution temporel.

Le module de génération 46 est configuré pour générer la bibliothèque 48 de deuxièmes distributions pour une pluralité de défauts 20 dans la pièce métallique 12 et pour une pluralité d'orientations de l'émission d'excitation ultrasonore impulsionnelle, chaque deuxième distribution étant calculée pour un défaut respectif 20 et pour une orientation d'émission respective. Chaque orientation d'émission est l'orientation d'une direction d'émission d'une excitation ultrasonore impulsionnelle correspondante, émise par le capteur ultrasonore 15 ou bien en variante par l'émetteur ultrasonore distinct du capteur ultrasonore 15.

Sur la figure 2, le réacteur nucléaire 26, tel qu'un réacteur nucléaire à eau pressurisée, comprend comme connu en soi le cœur 24, un générateur de vapeur 63, une turbine 64 couplée à un générateur 65 d'énergie électrique, et un condenseur 66.

Le réacteur nucléaire 26 comprend un circuit primaire 68 équipé d'une pompe 69 et dans lequel circule de l'eau sous pression, selon le trajet matérialisé par les flèches sur la figure 2. Cette eau remonte notamment au travers du cœur 24 pour y être réchauffée en assurant la réfrigération du cœur 24.

Le circuit primaire 68 comprend en outre un pressuriseur 70 permettant de mettre sous pression l'eau circulant dans le circuit primaire 68.

L'eau du circuit primaire 68 alimente également le générateur de vapeur 63 où elle est refroidie en assurant la vaporisation d'eau circulant dans un circuit secondaire 72.

La vapeur produite par le générateur de vapeur 63 est canalisée par le circuit secondaire 72 vers la turbine 64 puis vers le condenseur 66 où cette vapeur est condensée par échange de chaleur indirect avec de l'eau de refroidissement circulant dans le condenseur 66.

Le circuit secondaire 72 comprend, en aval du condenseur 66, une pompe 73 et un réchauffeur 74.

De manière classique, le cœur 24 comprend des assemblages de combustible 76 qui sont chargés dans une cuve 78 suivant un plan de chargement. Un seul assemblage de combustible 76 est représenté sur la figure 2, mais le cœur 24 comprend par exemple 157 assemblages de combustible 76.

Le réacteur nucléaire 26 comprend des grappes de commande 80 qui sont disposées dans la cuve 78 au-dessus de certains assemblages de combustible 76. Une seule grappe de commande 80 est représentée sur la figure 2, mais le cœur 24 comprend par exemple une soixantaine de grappes de commande 80.

Les grappes de commande 80 sont déplaçables par des mécanismes 82 pour venir s'insérer dans les assemblages de combustible 76 qu'elles surplombent.

Classiquement, chaque grappe de commande 80 comprend des crayons dont au moins certains comportent un matériau absorbant les neutrons.

Ainsi, le déplacement vertical de chaque grappe de commande 80 permet de régler la réactivité du réacteur nucléaire 26 et autorise des variations de la puissance globale P fournie par le cœur 24 depuis la puissance nulle jusqu'à la puissance nominale PN, en fonction de l'enfoncement des grappes de commande 80 dans les assemblages de combustible 76.

Comme illustré par la figure 3, chaque assemblage de combustible 76 comprend de manière classique un réseau de crayons de combustible 84 et un squelette 86 de support des crayons de combustible 84.

Le squelette 86 comprend classiquement un embout inférieur 88, un embout supérieur 90, un réseau de tubes-guides 91 reliant les deux embouts 88 et 90 et destinés à recevoir les crayons des grappes de commande 80 et à positionner des grilles 92 formant entretoise pour positionner les réseaux de crayons de combustible 84 et de tubes-guides 91.

Chaque crayon de combustible 84 comprend de manière classique, la gaine 22 sous forme d'un tube fermé à son extrémité inférieure par un bouchon inférieur 94 et à son extrémité supérieure par un bouchon supérieur 95. Le crayon de combustible 84 comprend une série de pastilles, non représentées, empilées à l'intérieur de la gaine 22 et prenant appui contre le bouchon inférieur 94. Un ressort de maintien, non représenté, est disposé dans le tronçon supérieur de la gaine 22 pour prendre appui sur le bouchon supérieur 95 et sur la pastille supérieure.

Classiquement, les pastilles sont à base de matière fissile, par exemple d'oxyde d'uranium, et la gaine 22 est en alliage de zirconium.

Le fonctionnement du système électronique de contrôle 10 selon l'invention va désormais être expliqué à l'aide de la figure 4 représentant un organigramme d'un procédé, selon l'invention, de contrôle de la pièce métallique 12.

Lors d'une étape initiale 100, le système électronique de contrôle 10 détermine, via son dispositif de détermination 14 et le capteur ultrasonore 15, la réponse ultrasonore de la pièce métallique 12 qui est contrôlée. Cette détermination de la réponse ultrasonore, reçue par le capteur ultrasonore 15, de la pièce métallique contrôlée 12 est connue en soi.

Le système électronique de contrôle 10 simule ensuite, lors de l'étape suivante 110 et via son dispositif de simulation 16, la réponse ultrasonore de la pièce métallique 12, cette simulation étant effectuée via la mise en œuvre du procédé de simulation selon l'invention, qui sera décrit plus en détail par la suite à l'aide de la figure 5.

Le système électronique de contrôle 10 identifie enfin, lors de l'étape 120 et via son dispositif d'identification 18, un éventuel défaut 20 dans la pièce métallique 12 par comparaison de la réponse ultrasonore déterminée lors de l'étape 100 et de la réponse ultrasonore simulée lors de l'étape 110.

Cette étape d'identification 120 d'un éventuel défaut 20 est par exemple faite par corrélation de la réponse ultrasonore simulée lors de l'étape 110 avec la réponse ultrasonore déterminée lors de l'étape 100, afin d'en déduire si la réponse ultrasonore déterminée à partir de la pièce métallique 12 examinée correspond à la réponse ultrasonore simulée avec le défaut 20. Autrement dit, cette étape d'identification 120 vise à relier la réponse ultrasonore reçue par le capteur ultrasonore 15 lors de l'étape 100 à la géométrie d'un défaut 20 dont la réponse ultrasonore a été simulée lors de l'étape 110.

L'étape de simulation 110 et le fonctionnement du dispositif électronique de simulation 16 selon l'invention vont désormais être expliqués à l'aide de la figure 5 représentant un organigramme du procédé, selon l'invention, de simulation d'une réponse ultrasonore de la pièce métallique 12.

Lors d'une sous-étape 200, le dispositif électronique de simulation 16 calcule, via son premier module de calcul 40, la première distribution d'ondes ultrasonores pour la pièce métallique 12 sans défaut.

Ce calcul de la première distribution d'ondes ultrasonores pour la pièce métallique 12 saine est connu en soi, par exemple de la thèse de M. Aniss BENDJOUDI, intitulée *« Contrôle Non Destructif ultrasonore de tubes métalliques : Modélisation, simulation, confrontation à l'expérience et études paramétriques ».*

Ce calcul de la première distribution d'ondes ultrasonores comporte un premier calcul de la propagation des ondes ultrasonores dans le liquide 32, tel que l'eau, sur une surface virtuelle S2, comme illustré sur la figure 6, où la surface active du capteur ultrasonore 15 est représentée par la surface S1.

Ce calcul de la première distribution d'ondes ultrasonores comporte ensuite un deuxième calcul de la propagation des ondes ultrasonores dans la pièce métallique 12, comme illustré sur la figure 7, la surface virtuelle S2 étant dans ce cas à la fois émettrice et réceptrice d'ondes ultrasonores.

Pour ce deuxième calcul, la pièce métallique 12 est de préférence décomposée en zones successives et adjacentes $S_3^1$, $S_3^2$, ..., $S_3^N$, c'est-à-dire en zones successives $S_3^j$, où j est un indice entier compris entre 1 et N, et le deuxième calcul est effectué de manière unitaire pour chaque zone successive $S_3^j$.

Le calcul de la première distribution d'ondes ultrasonores est alors obtenu par combinaison du premier calcul de la propagation des ondes ultrasonores dans le liquide 32 et du deuxième calcul de la propagation des ondes ultrasonores dans la pièce métallique 12, le premier calcul étant effectué via une méthode semi-analytique rapide et le deuxième calcul étant effectué via une méthode discrète de type Différence Finies en Domaine Temporel ou FDTD (de l'anglais *Finite Difference Time Domain*).

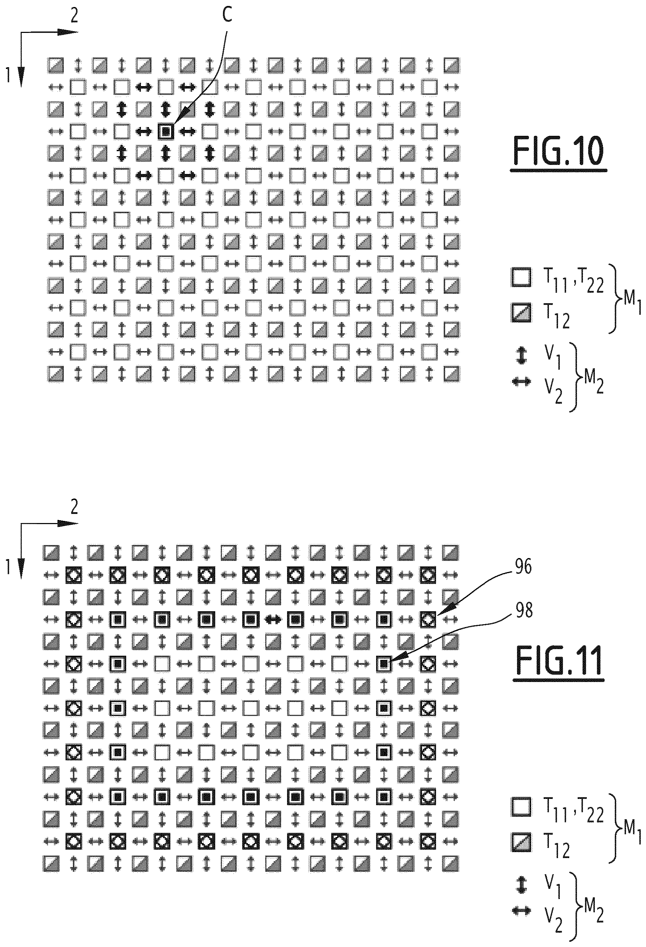

Dans l'exemple des figures 10 et 11, un double maillage avec d'une part un premier maillage M1 en contraintes, ou tensions, et d'autre part un deuxième maillage M2 en vitesses est utilisé pour la mise en œuvre de cette méthode FDTD, ce double maillage étant particulièrement adapté et efficace dans le cas d'interfaces entre des milieux aux propriétés mécaniques différentes (par exemple l'interface eau/métal ou métal/air). Sur les figures 10 et 11, les contraintes ou tensions sont représentées sous forme de carrés blancs pour les tensions $T_{11}$ et $T_{22}$, où 1 est un indice associé à une première direction et 2 un indice associé à une deuxième direction, et sous forme de carré à moitié blanc et à moitié grisé pour les tensions $T_{12}$. Sur ces figures 10 et 11, les vitesses sont représentées sous forme de flèches bidirectionnelles selon la direction 1 pour les vitesses $v_1$ et selon la direction 2 pour les vitesses $v_2$. Le premier maillage M1 correspond alors aux carrés des figures 10 et 11, et le deuxième maillage M2 correspond aux flèches bidirectionnelles.

Sur la figure 10 sont en outre représentées, sous forme de flèches bidirectionnelles en gras, les excitations nécessaires au calcul des distributions élémentaires depuis un point central C. Le calcul de chaque distribution élémentaire s'étale alors sur plusieurs points du deuxième maillage M2 en vitesses.

Il est nécessaire de sauvegarder deux sous-réseaux 96, 98 imbriqués, comme cela est expliqué ci-après en regard de la figure 11, et la sauvegarde de chaque sous-réseau prend la forme d'un ensemble de fichiers binaires, avec par exemple la sauvegarde de six fichiers pour chaque surface élémentaire correspondant à la frontière F d'une zone $S_3^j$, à savoir trois fichiers pour les tensions et trois fichiers pour les vitesses.

Le dispositif électronique de simulation 16 calcule ensuite, lors d'une sous-étape suivante 210 et via son deuxième module de calcul 42, la deuxième distribution d'ondes ultrasonores pour la zone prédéfinie $S_3^k$ associée à la pièce métallique 12, la zone prédéfinie $S_3^k$ comportant le défaut 20 de la pièce métallique 12, comme représenté sur la figure 8.

La sous-étape de calcul de la deuxième distribution 210 comporte alors le calcul d'une pluralité de distributions élémentaires, comme représenté sur la figure 9, chaque distribution élémentaire correspondant à une réponse ultrasonore reçue par un récepteur situé à la frontière F de la zone prédéfinie $S_3^k$, en réponse à l'émission d'une excitation ultrasonore impulsionnelle depuis une source élémentaire $\vec{r}$ située à la frontière F de la zone prédéfinie $S_3^k$. Chaque distribution élémentaire est par exemple calculée via la méthode discrète de type Différence Finies en Domaine Temporel ou FDTD.

Cette sous-étape de calcul de la deuxième distribution 210 est indépendante de la sous-étape de calcul de la première distribution 200. Le calcul de la deuxième distribution est par exemple effectué via l'équation (1) précédente.

L'homme du métier comprendra que la position de la source élémentaire $\vec{r}$ située à la frontière F varie d'une distribution élémentaire calculée à l'autre, la position du récepteur situé à la frontière F de la zone prédéfinie $S_3^k$ étant en revanche inchangée d'une distribution élémentaire calculée à l'autre. Autrement dit, ce calcul de la pluralité de distributions élémentaires revient à effectuer une série de simulations élémentaires sur un petit domaine, à savoir la

zone prédéfinie $S_3^k$, de la pièce métallique 12 comprenant le défaut 20. Chaque simulation élémentaire correspond à une source différente, mais avec des enregistrements à des positions identiques.

Dans l'exemple de la figure 11 avec deux sous-réseaux 96, 98 imbriqués, le premier sous-réseau 96 est appelé sous-réseau de représentation, et est notamment le sous-réseau utilisé pour appliquer l'équation (1) précédente. Le deuxième sous-réseau 98 est appelé sous-réseau de réciprocité, et est notamment le sous-réseau utilisé pour le calcul de la distribution résultante $R^B(t)$ selon les équations (2) et (3) précédentes. Le premier sous-réseau 96, ou sous-réseau de représentation, est représenté sous forme de carrés avec un losange interne, et le deuxième sous-réseau 98, ou sous-réseau de réciprocité, est représenté sous forme de carrés avec un carré interne.

Sur la figure 11, le premier sous-réseau 96, ou sous-réseau de représentation, est en forme d'une première boite, également appelée boite de représentation, et doit inclure toutes les excitations élémentaires. Le deuxième sous-réseau 98, ou sous-réseau de réciprocité, qui est celui des excitations élémentaires et est en forme d'une deuxième boite, également appelée boite de réciprocité, est alors par exemple imbriqué dans la boite de représentation.

Les sources élémentaires $\vec{r}$ pour le calcul de la pluralité de distributions élémentaires sont alors des points du sous-réseau de réciprocité et les récepteurs sont des points du sous-réseau de représentation. Pour chaque source élémentaire $\vec{r}$, six simulations élémentaires sont par exemple effectuées, à savoir trois simulations élémentaires pour simuler des sources de vitesse de direction i, où l'indice i désigne successivement les trois directions de l'espace, conduisant à l'obtention des composantes $H_{ni}$ et des fonctions de Green $G_{ni}$, et trois simulations élémentaires pour simuler des sources de tensions de direction i, où l'indice i désigne successivement les trois directions de l'espace, conduisant à l'obtention de fonctions analogues aux composantes $H_{ni}$ et aux fonctions de Green $G_{ni}$, non pas pour une source en vitesse, mais pour une source en tension. A chaque simulation élémentaire sont associées la position de la source et la nature de la source, ainsi que la position et la nature du récepteur.

Le dispositif électronique de simulation 16 calcule ensuite, lors d'une sous-étape suivante 220 et via son module de détermination 44, la distribution résultante $R^B(t)$ d'ondes ultrasonores pour la pièce métallique 12 avec le défaut 20, à partir des première et deuxième distributions calculées. Cette distribution résultante $R^B(t)$ est par exemple déterminée à partir des équations (2) et (3) précédentes.

En complément facultatif, les calculs correspondant aux équations (1) à (3) précédentes sont effectués en parallèle ce qui permet de factoriser un grand nombre d'opérations. Le chargement des données est de préférence aussi optimisé : les données de la pièce métallique 12 saine sont chargés intégralement en mémoire et les données correspondant aux composantes $H_{ni}$ et aux fonctions de Green $G_{ni}$ sont chargées au fur et à mesure. Chaque fichier est lu une seule fois, et l'ordre précité permet une parallélisation à grande échelle des boucles relatives aux composantes $H_{ni}$ et aux fonctions de Green $G_{ni}$. Les convolutions sont de préférence effectuées dans le domaine de Fourier ce qui accélère également les calculs, tout en factorisant une partie des opérations.

En complément facultatif, le dispositif électronique de simulation 16 génère, lors d'une sous-étape 230 et via son module de génération 46, la bibliothèque 48 de deuxièmes distributions pour une pluralité de défauts 20 dans la pièce métallique 12 et pour une pluralité d'orientations de l'émission d'excitation ultrasonore impulsionnelle. Cette bibliothèque 48 permet alors une identification plus efficace d'un éventuel défaut 20 dans la pièce métallique 12 lorsqu'elle est contrôlée par le système électronique de contrôle 10 selon l'invention.

Ainsi, le procédé de simulation et le dispositif électronique de simulation 16 selon l'invention sont bien plus efficaces pour calculer la réponse ultrasonore simulée de la pièce métallique 12 que le procédé de simulation et le dispositif de simulation de l'état de la technique. A titre d'exemple, pour une configuration de contrôle et une entaille étalon définis selon les standards de la norme ASTM, avec le procédé de simulation selon l'invention et sur une station de travail ayant 2 x 26 cœurs, la première distribution pour la pièce saine a été calculée en environ 30h et les distributions élémentaires autour du défaut 20 ont été calculées en 4 jours, avant que la deuxième distribution puis la distribution résultante $R^B(t)$ soient déterminées en environ 2h avec un balayage de 12x15 positions. Avec le procédé de simulation de l'état de la technique et sur la même station de travail ayant 2 x 26 cœurs, la simulation d'une réponse ultrasonore équivalente de la pièce métallique 12 nécessite une durée de 12 x 15 x 30h, c'est à dire 225 jours de calcul, soit une durée plus de 40 fois supérieure à celle nécessaire avec le procédé de simulation selon l'invention.

Le procédé de simulation selon l'invention permet alors d'améliorer le contrôle de pièces métalliques 12, notamment de produits en alliages de zirconium, telles que des gaines 22 destinées à entourer des pastilles de combustible nucléaire dans le domaine nucléaire.

On conçoit ainsi que le procédé de simulation et le dispositif électronique de simulation 16 selon l'invention permettent de diminuer le temps nécessaire au calcul de la réponse ultrasonore de la pièce métallique 12.

L'homme du métier comprendra notamment que le calcul de la deuxième distribution selon l'invention est effectué seulement sur une portion de la pièce, cette portion étant strictement plus petite que ladite pièce. En effet, cette portion de la pièce est la zone prédéfinie associée au calcul de la deuxième distribution et, comme indiqué précédemment, cette zone prédéfinie correspond par exemple au sous-volume $S_3^k$. Il est également indiqué ci-avant que cette zone prédéfinie est typiquement un petit domaine de la pièce métallique 12.

Autrement dit, le calcul de la deuxième distribution selon l'invention diffère strictement d'un calcul qui serait effectué globalement sur l'intégralité de la pièce, par exemple via une méthode des éléments finis.

En outre, l'homme du métier pourrait envisager d'autres méthodes de calcul de la distribution résultante, en variante de l'exemple des équations (2) et (3).

A titre d'exemple, et en variante des équations (2) et (3), la distribution résultante $R^B(t)$ est alors calculée selon l'équation suivante :

$$R^B(t) = A \int_{S_c} v_1^B(t)\, dS$$

où A est une constante de normalisation propre au capteur,

$S_c$ est la surface active du capteur et

$v_1^B(t)$ est la vitesse normale.

A titre d'un autre exemple, et encore en variante des équations (2) et (3), la distribution résultante $R^B(t)$ est calculée selon l'équation suivante :

$$R^B(t) = hR^A(t) * T^B - \frac{1}{2.I_0} \int_{X1h} \left( ht_1^A * v_1^B - t_i^B * hv_1^A \right) dS$$

où $X1h$ est une ligne fictive entre le capteur et la pièce, et

les grandeurs dans l'intégrale sont les composantes normales à cette ligne.

A titre d'un autre exemple encore, et en variante de l'équation (3), tout en conservant l'équation (2), la contribution $R^{Diff}(t)$ du défaut 20 au signal reçu par le capteur ultrasonore est alternativement calculée selon l'équation suivante, en remplaçant les termes A par des termes B et vice-versa :

$$R^{Diff}(t) = -\frac{1}{2.I_0} \int_F \left( ht_i^B(r',t) * v_i^A(r',t) - t_i^A(r',t) * hv_i^B(r',t) \right) . dF$$

Dans l'exemple décrit précédemment, la position de la source élémentaire $\vec{r}$ située à la frontière F de la zone prédéfinie $S_3^k$ varie d'une distribution élémentaire calculée à l'autre, pendant que la position du récepteur situé à la frontière F de la zone prédéfinie $S_3^k$ est en revanche inchangée d'une distribution élémentaire calculée à l'autre.

L'homme du métier comprendra alors qu'en complément avec plusieurs récepteurs, la position de la source élémentaire $\vec{r}$ située à la frontière F de la zone prédéfinie $S_3^k$ varie d'une distribution élémentaire calculée à l'autre, pendant que les positions de plusieurs récepteurs situés à la frontière F de la zone prédéfinie $S_3^k$ sont inchangées d'une distribution élémentaire calculée à l'autre

En variante, le deuxième module de calcul 42 met en œuvre plusieurs sources élémentaires disposées les unes à côté des autres à la frontière F de la zone prédéfinie $S_3^k$ et un unique récepteur situé à la frontière F de la zone prédéfinie $S_3^k$. Les positions des sources élémentaires $\vec{r}$ situées à la frontière F de la zone prédéfinie $S_3^k$ sont alors inchangées d'une distribution élémentaire calculée à l'autre, pendant que la position de l'unique récepteur situé à la frontière F de la zone prédéfinie $S_3^k$ varie d'une distribution élémentaire calculée à l'autre.

**Revendications**

**1.** Procédé de simulation d'une réponse ultrasonore d'une pièce métallique (12), le procédé étant mis en œuvre par un dispositif électronique de simulation (16) et comprenant les étapes suivantes :

- le calcul (200) d'une première distribution d'ondes ultrasonores pour la pièce métallique (12) sans défaut, la première distribution formant une simulation d'une réponse ultrasonore reçue par un capteur ultrasonore (15) depuis la pièce métallique (12) lorsqu'elle ne comporte pas de défaut, en réponse à l'émission d'une excitation ultrasonore impulsionnelle en direction de ladite pièce (12) ;
- le calcul (210) d'une deuxième distribution d'ondes ultrasonores pour une zone prédéfinie ($S_3^k$) associée à la pièce métallique (12), ladite zone prédéfinie ($S_3{}^k$) étant strictement plus petite que ladite pièce, la zone prédéfinie ($S_3{}^k$) comportant un défaut (20) de la pièce métallique (12), la deuxième distribution formant une simulation d'une réponse ultrasonore reçue par le capteur ultrasonore (15) depuis la zone prédéfinie ($S_3{}^k$), en réponse à l'émission d'une excitation ultrasonore en direction de ladite zone ($S_3{}^k$),

le calcul de la deuxième distribution (210) comportant le calcul d'une pluralité de distributions élémentaires, chaque distribution élémentaire correspondant à une réponse ultrasonore reçue par un récepteur situé à la frontière (F) de la zone prédéfinie ($S_3{}^k$), en réponse à l'émission d'une excitation ultrasonore impulsionnelle depuis une source élémentaire ($\vec{r}$) située à la frontière (F) de la zone prédéfinie ($S_3{}^k$) ;

- la détermination (220) d'une distribution résultante ($R^B(t)$) d'ondes ultrasonores pour la pièce métallique (12) avec défaut (20), à partir des première et deuxième distributions calculées, la distribution résultante ($R^B(t)$) formant une simulation d'une réponse ultrasonore reçue par le capteur ultrasonore (15) depuis la pièce métallique (12) comportant le défaut (20), en réponse à l'émission d'une excitation ultrasonore en direction de ladite pièce (12) comportant le défaut (20).

2. Procédé selon la revendication 1, dans lequel chaque distribution élémentaire est calculée à partir d'une fonction de transfert de Green ($G_{ni}(r',r,t)$) sur un domaine de calcul restreint à la zone prédéfinie ($S_3{}^k$), et pour lequel la source et le récepteur sont situés à la frontière (F) de ladite zone.

3. Procédé selon la revendication 2, dans lequel chaque distribution élémentaire vérifie l'équation suivante :

$$v_i^B(r,t) = \int_F \left( H_{ni}(r',r,t) * v_n^A(r',t) - t_n^A(r',t) * G_{ni}(r',r,t) \right) \cdot \mathrm{dF}$$

où $v_i^B(r,t)$ représente une composante selon la direction i de la vitesse particulaire au point r dans un état B en présence du défaut (20),

F représente la frontière de la zone prédéfinie ($S_3{}^k$),

$H_{ni}(r',r,t)$ représente une composante selon la direction i d'un vecteur traction sur la frontière F au point r' généré par une excitation depuis une source impulsionnelle en vitesse de direction n au point r,

$v_n^A(r',t)$ représente une composante selon la direction n de la vitesse particulaire au point r' dans l'état A,

$t_n^A(r',t)$ représente une composante selon la direction n de la traction sur la frontière F au point r' dans un état A sans défaut (20),

$G_{ni}(r',r,t)$ est une fonction de transfert de Green représentant une composante selon la direction i de la vitesse au point r' générée par une excitation depuis une source impulsionnelle en vitesse de direction n au point r, et les symboles '*' représentent l'opérateur de convolution temporel.

4. Procédé selon l'une quelconque des revendications précédentes, dans lequel la distribution résultante ($R^B(t)$) est déterminée en appliquant l'équation de réciprocité d'Auld aux première et deuxième distributions calculées.

5. Procédé selon la revendication 4, dans lequel la distribution résultante ($R^B(t)$) vérifie l'équation suivante :

$$R^B(t) = \mathrm{h}R^A(t) * E(t) + R^{\mathrm{Diff}}(t)$$

où $R^{\mathrm{Diff}}(t) = -\frac{1}{2 \cdot I_0} \int_F (\mathrm{h}t_i^A(r',t) * v_i^B(r',t) - t_i^B(r',t) * \mathrm{h}v_i^A(r',t)) \cdot \mathrm{dF}$ représente la contribution du défaut (20) au signal reçu par le capteur

avec $R^B(t)$ représentant le signal électrique mesuré en réception par le capteur, pour la pièce métallique (12) dans un état B en présence du défaut (20),

$\mathrm{h}R^A(t)$ représentant la réponse impulsionnelle du signal électrique en réception, dans un état A sans défaut,

$E(t)$ représentant le signal électrique d'excitation du capteur,

$\mathrm{h}t_i^A(r',t)$ représentant la réponse impulsionnelle pour la composante selon une direction i de la traction sur la frontière F au point r', dans l'état A,

$v_i^B(r',t)$ représentant une composante selon la direction i de la vitesse particulaire au point r', dans l'état B,

$t_i^I(r',t)$ représentant une composante selon la direction i de la traction sur la frontière F au point r', dans l'état B,

$\mathrm{h}v_i^A(r',t)$ représentant la réponse impulsionnelle pour la composante selon la direction i de la vitesse particulaire au point r', dans l'état A,

$I_0$ représentant une constante de normalisation propre au capteur et à un système d'amplification du signal, et les symboles '*' représentent l'opérateur de convolution temporel.

6. Procédé selon l'une quelconque des revendications précédentes, dans lequel le procédé comprend en outre la génération (230) d'une bibliothèque (48) de deuxièmes distributions pour une pluralité de défauts (20) dans la pièce métallique (12) et d'orientations de l'émission d'excitation ultrasonore impulsionnelle, chaque deuxième distribution étant calculée pour un défaut (20) respectif de la pièce métallique (12).

7. Procédé selon l'une quelconque des revendications précédentes, dans lequel la pièce métallique (12) est une gaine (22) destinée à entourer des pastilles de combustible nucléaire dans un cœur (24) de réacteur nucléaire (26).

8. Procédé de contrôle d'une pièce métallique (12), comprenant les étapes suivantes :

- détermination (100) d'une réponse ultrasonore de la pièce métallique (12), via un capteur ultrasonore (15) ;
- simulation (110) d'une réponse ultrasonore de la pièce métallique (12), via la mise en œuvre d'un procédé de simulation selon l'une quelconque des revendications 1 à 7 ;
- identification (120) d'un éventuel défaut (20) dans la pièce métallique (12) par comparaison des réponses ultrasonores déterminée et simulée de la pièce métallique (12).

9. Dispositif électronique (16) de simulation d'une réponse ultrasonore d'une pièce métallique (12), le dispositif électronique de simulation (16) comprenant :

- un premier module de calcul (40) configuré pour calculer une première distribution d'ondes ultrasonores pour la pièce métallique (12) sans défaut, la première distribution formant une simulation d'une réponse ultrasonore reçue par un capteur ultrasonore (15) depuis la pièce métallique (12) lorsqu'elle ne comporte pas de défaut, en réponse à l'émission d'une excitation ultrasonore en direction de ladite pièce (12) ;
- un deuxième module de calcul (42) configuré pour calculer une deuxième distribution d'ondes ultrasonores pour une zone prédéfinie ($S_3{}^k$) associée à la pièce métallique (12), ladite zone prédéfinie ($S_3{}^k$) étant strictement plus petite que ladite pièce, la zone prédéfinie ($S_3{}^k$) comportant un défaut (20) de la pièce métallique (12), la deuxième distribution formant une simulation d'une réponse ultrasonore reçue par le capteur ultrasonore (15) depuis la zone prédéfinie ($S_3{}^k$), en réponse à l'émission d'une excitation ultrasonore en direction de ladite zone ($S_3{}^k$), le deuxième module de calcul (42) étant configuré pour calculer une pluralité de distributions élémentaires, chaque distribution élémentaire correspondant à une réponse ultrasonore reçue par un récepteur situé à la frontière (F) de la zone prédéfinie ($S_3{}^k$), en réponse à l'émission d'une excitation ultrasonore depuis une source élémentaire ($\vec{r}$) située à la frontière (F) de la zone prédéfinie ($S_3{}^k$) ;
- un module de détermination (44) configuré pour déterminer une distribution résultante ($R^B(t)$) d'ondes ultrasonores pour la pièce métallique (12) avec défaut (20), à partir des première et deuxième distributions calculées, la distribution résultante ($R^B(t)$) formant une simulation d'une réponse ultrasonore reçue par le capteur ultrasonore (15) depuis la pièce métallique (12) comportant le défaut (20), en réponse à l'émission d'une excitation ultrasonore en direction de ladite pièce (12) comportant le défaut (20).

10. Système électronique (10) de contrôle d'une pièce métallique (12), le système électronique de contrôle (10) comprenant :

- un dispositif électronique de détermination (14) configuré pour déterminer une réponse ultrasonore de la pièce métallique (12), à partir d'un capteur ultrasonore (15) ;
- un dispositif électronique de simulation (16) configuré pour simuler une réponse ultrasonore de la pièce métallique (12) ;
- un dispositif électronique d'identification (18) configuré pour identifier un éventuel défaut (20) dans la pièce métallique (12) par comparaison des réponses ultrasonores déterminée et simulée de la pièce métallique (12), **caractérisé en ce que** le dispositif électronique de simulation (16) est selon la revendication précédente.

**Patentansprüche**

1. Verfahren zur Simulation einer Ultraschallantwort eines Metallteils (12), wobei das Verfahren von einer elektronischen Simulationsvorrichtung (16) durchgeführt wird und die folgenden Schritte umfasst:

- Berechnen (200) einer ersten Verteilung von Ultraschallwellen für das Metallteil (12) ohne Fehler, wobei die erste Verteilung eine Simulation einer Ultraschallantwort bildet, die von einem Ultraschallsensor (15) von dem Metallteil (12) empfangen wird, wenn es keinen Fehler aufweist, als Reaktion auf das Senden einer gepulsten Ultraschallerregung in Richtung des Teils (12);

- Berechnen (210) einer zweiten Verteilung von Ultraschallwellen für einen vordefinierten Bereich $(S_3^k)$, der mit dem Metallteil (12) assoziiert ist, wobei der vordefinierte Bereich $(S_3^k)$ strikt kleiner ist als das Teil, wobei der vordefinierte Bereich $(S_3^k)$ einen Fehler (20) des Metallteils (12) aufweist, wobei die zweite Verteilung eine Simulation einer Ultraschallantwort bildet, die von dem Ultraschallsensor (15) von dem vordefinierten Bereich $(S_3^k)$ empfangen wird, als Reaktion auf das Senden einer Ultraschallerregung in Richtung des Bereichs $(S_3^k)$, das Berechnen der zweiten Verteilung (210) das Berechnen einer Vielzahl von Elementarverteilungen umfasst, wobei jede Elementarverteilung einer Ultraschallantwort entspricht, die von einem Empfänger empfangen wird, der sich an der Grenze (F) des vordefinierten Bereichs $(S_3^k)$ befindet, als Reaktion auf das Emittieren einer impulsförmigen Ultraschallerregung von einer Elementarquelle $(\vec{r})$, die sich an der Grenze (F) des vordefinierten Bereichs $(S_3^k)$ befindet;

- Bestimmen (220) einer resultierenden Verteilung $(R^B(t))$ von Ultraschallwellen für das Metallteil (12) mit Fehler (20) anhand der ersten und der zweiten berechneten Verteilung, wobei die resultierende Verteilung $(R^B(t))$ eine Simulation einer Ultraschallantwort bildet, die durch den Ultraschallsensor (15) von dem Metallteil (12) mit dem Fehler (20) empfangen wird, als Reaktion auf das Emittieren einer Ultraschallerregung in Richtung des Teils (12) mit dem Fehler (20).

2. Verfahren nach Anspruch 1, wobei jede Elementarverteilung aus einer Green'schen Transferfunktion $(G_{ni}(r',r,t))$ über ein Berechnungsgebiet berechnet wird, die auf das vordefinierte Gebiet $(S_3^k)$ beschränkt ist und bei dem sich die Quelle und der Empfänger an der Grenze (F) des Gebiets befinden.

3. Verfahren nach Anspruch 2, wobei jede Elementarverteilung die folgende Gleichung erfüllt:

$$v_i^B(r,t) = \int_F (H_{ni}(r',r,t) * v_n^A(r',t) - t_n^A(r',t) * G_{ni}(r',r,t)) \cdot \mathrm{d}F$$

wobei $v_i^B(r,t)$ eine Komponente in der Richtung i der Teilchengeschwindigkeit an dem Punkt r in einem Zustand B bei Vorhandensein des Fehlers (20) darstellt,
F die Grenze des vordefinierten Bereichs $(S_3^k)$ darstellt,
$H_{ni}(r',r,t)$ eine Komponente in der Richtung i eines Zugvektors auf der Grenze F an dem Punkt r' darstellt, der durch eine Erregung von einer Geschwindigkeitsimpulsquelle in der Richtung n an dem Punkt r erzeugt wird,
$v_n^A(r',t))$ eine Komponente in der Richtung n der Teilchengeschwindigkeit an dem Punkt r' in dem Zustand A darstellt,
$t_n^A(r',t))$ eine Komponente in der Richtung n der Zugkraft auf der Grenze F an dem Punkt r' in einem Zustand A ohne Fehler (20) darstellt,
$G_{ni}(r',r,t)$ eine Green'sche Übertragungsfunktion ist, die eine Komponente darstellt gemäß der Richtung i der Geschwindigkeit an dem Punkt r', die durch eine Erregung von einer Geschwindigkeitsimpulsquelle mit der Richtung n am Punkt r erzeugt wird, und
die Symbole '*' den zeitlichen Faltungsoperator darstellen.

4. Verfahren nach einem der vorherigen Ansprüche, wobei die resultierende Verteilung $(R^B(t))$ durch Anwenden der Auld'schen Reziprozitätsgleichung auf die berechnete erste und zweite Verteilung bestimmt wird.

5. Verfahren nach Anspruch 4, wobei die resultierende Verteilung $(R^B(t))$ die folgende Gleichung erfüllt:

$$R^B(t) = hR^A(t)*E(t)+R^{Diff}(t)$$

wobei $R^{Diff}(t) = -\frac{1}{2 \cdot I_0} \int_F (\mathrm{h}t_i^A(r',t) * v_i^B(r',t) - t_i^B(r',t) * \mathrm{h}v_i^A(r',t)) \cdot \mathrm{d}F$ den Beitrag des Fehlers (20) zu dem vom Sensor empfangenen Signal darstellt,

wobei $R^B(t)$ das bei Empfang durch den Sensor gemessene elektrische Signal für das Metallteil (12) in einem Zustand B bei Vorhandensein des Fehlers (20) darstellt,

wobei hR$^A$(t) die Impulsantwort des elektrischen Signals bei Empfang in einem Zustand A ohne Fehler darstellt,

wobei E(t) das elektrische Signal zur Erregung des Sensors darstellt,

ht$_i^A$(r',t) die Impulsantwort für die Komponente in einer Richtung i der Zugkraft auf der Grenze F an dem Punkt r' in dem Zustand A darstellt,

wobei V$_i^B$(r',t) eine Komponente in der Richtung i der Teilchengeschwindigkeit an dem Punkt r' in dem Zustand B darstellt,

t$_i^B$(r',t) eine Komponente in der Richtung i der Zugkraft auf die Grenze F an dem Punkt r' in dem Zustand B darstellt,

hv$_i^A$(r',t) die Impulsantwort für die Komponente in der Richtung i der Teilchengeschwindigkeit an Punkt r' in dem Zustand A darstellt,

wobei I$_0$ eine Normalisierungskonstante darstellt, die dem Sensor und einem Signalverstärkungssystem eigen ist, und

die Symbole '*' den zeitlichen Faltungsoperator darstellen.

6. Verfahren nach einem der vorherigen Ansprüche, wobei das Verfahren ferner das Erzeugen (230) einer Bibliothek (48) von zweiten Verteilungen für eine Vielzahl von Fehlern (20) in dem Metallteil (12) und von Ausrichtungen der Emission der gepulsten Ultraschallerregung umfasst, wobei jede zweite Verteilung für einen jeweiligen Fehler (20) des Metallteils (12) berechnet wird.

7. Verfahren nach einem der vorherigen Ansprüche, wobei das Metallteil (12) eine Hülle (22) ist, die dazu bestimmt ist, Kernbrennstofftabletten in einem Kern (24) eines Kernreaktors (26) zu umschließen.

8. Verfahren zum Prüfen eines Metallteils (12), umfassend die folgenden Schritte:

   - Bestimmen (100) einer Ultraschallantwort des Metallteils (12) über einen Ultraschallsensor (15);
   - Simulieren (110) einer Ultraschallantwort des Metallteils (12) über das Durchführen eines Simulationsverfahrens nach einem der Ansprüche 1 bis 7;
   - Identifizieren (120) eines möglichen Fehlers (20) in dem Metallteil (12) durch Vergleichen der bestimmten und der simulierten Ultraschallantwort des Metallteils (12).

9. Elektronische Vorrichtung (16) zur Simulation einer Ultraschallantwort eines Metallteils (12), die elektronische Simulationsvorrichtung (16) umfassend:

   - ein erstes Berechnungsmodul (40), das konfiguriert ist, um eine erste Verteilung von Ultraschallwellen für das Metallteil (12) ohne Fehler zu berechnen, wobei die erste Verteilung eine Simulation einer Ultraschallantwort bildet, die von einem Ultraschallsensor (15) von dem Metallteil (12) empfangen wird, wenn es keinen Fehler aufweist, als Reaktion auf die Emission einer Ultraschallerregung in Richtung des Teils (12);
   - ein zweites Berechnungsmodul (42), das konfiguriert ist, um eine zweite Ultraschallwellenverteilung für einen vordefinierten Bereich (S$_3^k$) berechnet, der mit dem Metallteil (12) verbunden ist, wobei der vordefinierte Bereich (S$_3^k$) strikt kleiner als das Teil ist,
   der vordefinierte Bereich (S$_3^k$) einen Fehler (20) des Metallteils (12) umfasst, wobei die zweite Verteilung eine Simulation einer Ultraschallantwort bildet, die von dem Ultraschallsensor (15) von dem vordefinierten Bereich (S$_3^k$) empfangen wird, als Reaktion auf das Senden einer Ultraschallerregung in Richtung des Bereichs (S$_3^k$), wobei das zweite Rechenmodul (42) konfiguriert ist, um eine Vielzahl von Elementarverteilungen zu berechnen, wobei jede Elementarverteilung einer Ultraschallantwort entspricht, die von einem Empfänger empfangen wird, der sich an der Grenze (F) des vordefinierten Bereichs (S$_3^k$) befindet, als Reaktion auf das Emittieren einer Ultraschallerregung von einer Elementarquelle ($\vec{r}$), die sich an der Grenze (F) des vordefinierten Bereichs (S$_3^k$) befindet;
   - ein Bestimmungsmodul (44), das konfiguriert ist, um eine resultierende Verteilung (R$^B$(t)) von Ultraschallwellen für das Metallteil (12) mit Fehler (20) anhand der ersten und der zweiten berechneten Verteilung zu bestimmen, wobei die resultierende Verteilung (R$^B$(t)) eine Simulation einer Ultraschallantwort bildet, die durch den Ultraschallsensor (15) von dem Metallteil (12) mit dem Fehler (20) empfangen wird, als Reaktion auf das Emittieren einer Ultraschallerregung in Richtung des Teils (12) mit dem Fehler (20).

10. Elektronisches System (10) zum Prüfen eines Metallteils (12), das elektronische Prüfsystem (10) umfassend:

   - eine elektronische Bestimmungsvorrichtung (14), die konfiguriert ist, um eine Ultraschallantwort des Metallteils (12) anhand eines Ultraschallsensors (15) zu bestimmen;

- eine elektronische Simulationsvorrichtung (16), die konfiguriert ist, um eine Ultraschallantwort des Metallteils (12) zu simulieren;
- eine elektronische Identifizierungsvorrichtung (18), die konfiguriert ist, um einen möglichen Fehler (20) in dem Metallteil (12) durch Vergleich der bestimmten und der simulierten Ultraschallantwort des Metallteils (12) zu identifizieren, **dadurch gekennzeichnet, dass** die elektronische Simulationsvorrichtung (16) gemäß dem vorherigen Anspruch ist.

**Claims**

1.  A method for simulating an ultrasonic response of a metal part (12), the method being carried out by an electronic simulating device (16) and comprising the following steps:

    - computing (200) a first distribution of ultrasonic waves for the metal part (12) without defect, the first distribution forming a simulation of an ultrasonic response received by an ultrasonic sensor (15) from the metal part (12) when it does not include any defect, in response to the emission of a pulsed ultrasonic excitation toward said part (12);
    - computing (210) a second distribution of ultrasonic waves for a predefined zone ($S_3^k$) associated with the metal part (12), said predefined zone ($S_3^k$) being strictly smaller than said part, the predefined zone ($S_3^k$) including a defect (20) of the metal part (12), the second distribution forming a simulation of an ultrasonic response received by the ultrasonic sensor (15) from the predefined zone ($S_3^k$), in response to the emission of an ultrasonic excitation toward said zone ($S_3^k$),
    the computation of the second distribution (210) including the computation of a plurality of elementary distributions, each elementary distribution corresponding to an ultrasonic response received by a receiver located at the border (F) of the predefined zone ($S_3^k$), in response to the emission of a pulsed ultrasonic excitation from an elementary source ($\vec{r}$) located at the border (F) of the predefined zone ($S_3^k$);
    - determining (220) a resultant distribution ($R^B(t)$) of ultrasonic waves toward the metal part (12) with defect (20), from the first and second computed distributions, the resultant distribution ($R^B(t)$) forming a simulation of an ultrasonic response received by the ultrasonic sensor (15) from the metal part (12) including the defect (20), in response to the emission of an ultrasonic excitation toward said part (12) including the defect (20).

2.  The method according to claim 1, wherein each elementary distribution is computed from a Green's transfer function ($G_{ni}(r',r't)$) over a computational domain restricted to the predefined zone ($S_3^k$), and for which the source and the receiver are located at the border (F) of said zone.

3.  The method according to claim 2, wherein each elementary distribution verifies the following equation:

$$v_i^B(r,t) = \int_F \left( H_{ni}(r',r,t) * v_n^A(r',t) - t_n^A(r',t) * G_{ni}(r',r,t) \right) \cdot \mathrm{dF}$$

where $v_i^B(r,t)$ represents a component in the direction i of the particular speed at the point r in a state B in the presence of the defect (20),
F represents the border of the predefined zone ($S_3^k$),
$H_{ni}(r',r,t)$ represents a component in the direction i of a traction vector on the border F at the point r' generated by an excitation from a speed pulse source with direction n at point r,
$v_n^A(r',t)$) represents a component in direction n of the particular speed at point r' in state A,
$t_n^A(r',t)$) represents a component in direction n of the traction on the border F at point r' in a state A without defect (20),
$G_{ni}(r',r,t)$ is a Green's transfer function representing a component in the direction i of the speed at the point r' generated by an excitation from a speed pulse source with direction n at point r, and
the '*' symbols represent the time convolution operator.

4.  The method according to any one of the preceding claims, wherein the resultant distribution ($R^B(t)$) is determined by applying Auld's reciprocity relation to the first and second computed distributions.

5.  The method according to claim 4, wherein the resultant distribution ($R^B(t)$) verifies the following equation:

$$R^B(t) = \mathrm{h}R^A(t) * E(t) + R^{\mathrm{Diff}}(t)$$

where $R^{\mathrm{Diff}}(t) = -\frac{1}{2 \cdot I_0} \int_F (\mathrm{ht}_i^A(r',t) * v_i^B(r',t) - t_i^B(r',t) * \mathrm{hv}_i^A(r',t)) \cdot \mathrm{dF}$ represents the contribution of the defect (20) to the signal received by the sensor

with $R^B(t)$ representing the electrical signal measured on reception by the sensor, for the metal part (12) in a state B when a defect (20) is present,

$\mathrm{h}R^A(t)$ representing the pulse response of the received electrical signal, in a state A without defect,

$E(t)$ representing the excitation electrical signal of the sensor,

$\mathrm{ht}_i^A(r',t)$ representing the pulse response for the component in a direction i of the traction on the border F at the point r', in the state A,

$v_i^B(r',t)$ representing a component in the direction i of the particular speed at the point r', in the state B,

$t_i^B(r',t)$ representing a component in the direction i of the traction on the border F at the point r', in the state B,

$\mathrm{hv}_i^A(r',t)$ representing the pulse response for the component in the direction i of the particular speed at the point r', in the state A,

$I_0$ representing a normalization constant specific to the sensor and to an amplification system of the signal, and the '*' symbols represent the time convolution operator.

6. The method according to any one of the preceding claims, wherein the method further comprises generating (230) a library (48) of second distributions for a plurality of defects (20) in the metal part (12) and orientations of the pulse ultrasonic excitation emission, each second distribution being computed for a respective defect (20) of the metal part (12).

7. The method according to any one of the preceding claims, wherein the metal part (12) is a cladding (22) designed to surround nuclear fuel pellets in a nuclear reactor (26) core (24).

8. A method for inspecting a metal part (12), comprising the following steps:

   - determining (100) an ultrasonic response of the metal part (12), via an ultrasonic sensor (15);
   - simulating (110) ultrasonic response of the metal part (12), via the implementation of a simulating method according to any one of claims 1 to 7; and
   - identifying (120) any defect (20) in the metal part (12) by comparison of the determined and simulated ultrasonic responses of the metal part (12).

9. An electronic device (16) for simulating an ultrasonic response of a metal part (12), the electronic simulating device (16) comprising:

   - a first computing module (40) configured to compute a first distribution of ultrasonic waves for the metal part (12) without defect, the first distribution forming a simulation of an ultrasonic response received by an ultrasonic sensor (15) from the metal part (12) when it does not include any defect, in response to the emission of an ultrasonic excitation toward said part (12);
   - a second computing module (42) configured to compute a second distribution of ultrasonic waves for a predefined zone ($S_3^k$) associated with the metal part (12), said predefined zone ($S_3^k$) being strictly smaller than said part, the predefined zone ($S_3^k$) including a defect (20) of the metal part (12), the second distribution forming a simulation of an ultrasonic response received by the ultrasonic sensor (15) from the predefined zone ($S_3^k$), in response to the emission of an ultrasonic excitation toward said zone ($S_3^k$),
   the second computing module (42) being configured to compute a plurality of elementary distributions, each elementary distribution corresponding to an ultrasonic response received by a receiver located at the border (F) of the predefined zone ($S_3^k$), in response to the emission of an ultrasonic excitation from an elementary source ($\vec{r}$) located at the border (F) of the predefined zone ($S_3^k$);
   - a determining module (44) configured to determine a resultant distribution ($R^B(t)$) of ultrasonic waves toward the metal part (12) with defect (20), from the first and second computed distributions, the resultant distribution ($R^B(t)$) forming a simulation of an ultrasonic response received by the ultrasonic sensor (15) from the metal part (12) including the defect (20), in response to the emission of an ultrasonic excitation toward said part (12) including the defect (20).

10. An electronic system (10) for inspecting a metal part (12), the electronic inspection system (10) comprising:

**EP 3 710 822 B1**

- an electronic determining device (14) configured to determine an ultrasonic response of the metal part (12), from an ultrasonic sensor (15);
- an electronic simulating device (16) configured to simulate an ultrasonic response of the metal part (12);
- an electronic identification device (18) configured to identify any defect (20) in the metal part (12) by comparison of the determined and simulated ultrasonic responses of the metal part (12), **characterized in that** the electronic simulating device (16) is according to the preceding claim.

**16**

## FIG.1

## FIG.2

FIG.3

Détermination d'une réponse ultrasonore de la pièce métallique    100

Simulation d'une réponse ultrasonore de la pièce métallique    110

Identification d'un éventuel défaut de la pièce métallique
par comparaison des réponses ultrasonores    120

FIG.4

Calcul d'une première distribution d'ondes ultrasonores
pour la pièce métallique sans défaut ⌒200

Calcul d'une deuxième distribution d'ondes ultrasonores pour une
zone prédéfinie avec défaut associé à la pièce ⌒210

Détermination d'une distribution résultante d'ondes ultrasonores
pour la pièce métallique avec défaut à partir
des première et deuxième distributions calculées ⌒220

Génération d'une bibliothèque de deuxièmes distributions pour une
pluralité de défauts dans la pièce métallique ⌒230

FIG.5

FIG.6          FIG.7

EP 3 710 822 B1

FIG.8

FIG.9

FIG.10

$$\square \quad T_{11}, T_{22} \left.\begin{array}{c} \\ \end{array}\right\} M_1$$
$$\boxed{\diagup} \quad T_{12}$$

$$\updownarrow \quad V_1 \left.\begin{array}{c} \\ \end{array}\right\} M_2$$
$$\leftrightarrow \quad V_2$$

FIG.11

$$\square \quad T_{11}, T_{22} \left.\begin{array}{c} \\ \end{array}\right\} M_1$$
$$\boxed{\diagup} \quad T_{12}$$

$$\updownarrow \quad V_1 \left.\begin{array}{c} \\ \end{array}\right\} M_2$$
$$\leftrightarrow \quad V_2$$

**RÉFÉRENCES CITÉES DANS LA DESCRIPTION**

**Documents brevets cités dans la description**

- US 20100299095 A1

**Littérature non-brevet citée dans la description**

- **QIXIANG TANG**. *Finite element simulation of ultrasonic waves in corroded reinforced concrete for early-stage corrosion detection*

- **SUBAIR**. *Finite Element Simulations to Predict Probability of Detection (PoD) Curves for Ultrasonic Inspection of Nuclear Component*